# EUROPÄISCHE PATENTSCHRIFT

(11) **EP 3 372 385 B1**
(45) Veröffentlichungstag und Bekanntmachung des Hinweises auf die Patenterteilung: **09.03.2022**
(21) Anmeldenummer: 17180184.8
(22) Anmeldetag: 07.07.2017
(51) Int. Cl.: B29C 64/268, G02B 6/02

(54) **BELICHTUNGSEINRICHTUNG FÜR EINE VORRICHTUNG ZUR ADDITIVEN HERSTELLUNG DREIDIMENSIONALER OBJEKTE**
EXPOSURE DEVICE FOR AN APPARATUS FOR THE ADDITIVE PRODUCTION OF THREE-DIMENSIONAL OBJECTS
DISPOSITIF D'EXPOSITION POUR UN DISPOSITIF DE FABRICATION ADDITIVE D'OBJETS TRIDIMENSIONNELS

(30) Priorität: 09.03.2017 DE 102017105057
(43) Veröffentlichungstag der Anmeldung: 12.09.2018
(73) Patentinhaber: CL Schutzrechtsverwaltungs GmbH, 96215 Lichtenfels (DE)
(72) Erfinder: Pontiller-Schymura, Peter, 95512 Neudrossenfeld (DE)
(74) Vertreter: Hafner & Kohl PartmbB

(56) Entgegenhaltungen:
- EP-A1- 2 281 677
- EP-A1- 3 017 895
- DE-A1-102015 010 892
- US-A1- 2014 263 209

## Beschreibung

Die Erfindung betrifft eine Belichtungseinrichtung für eine Vorrichtung zur additiven Herstellung dreidimensionaler Objekte, umfassend wenigstens eine Energiestrahlerzeugungseinrichtung, welche zur Erzeugung eines Energiestrahls eingerichtet ist, und wenigstens eine mit der Energiestrahlerzeugungseinrichtung optisch koppelbare oder gekoppelte Lichtleitfaser, welche zur Leitung wenigstens eines in diese eingekoppelten Energiestrahls zwischen einem Einkoppelbereich der Lichtleitfaser und einem Auskoppelbereich der Lichtleitfaser eingerichtet ist. Vorrichtungen zur additiven Herstellung dreidimensionaler Objekte umfassen bekanntermaßen eine Belichtungseinrichtung, welche eine Energiestrahlerzeugungseinrichtung und eine mit dieser optisch gekoppelte Lichtleitfaser umfasst. Die Energiestrahlerzeugungseinrichtung ist zur Erzeugung eines Energiestrahls eingerichtet, die Lichtleitfaser ist zur Leitung wenigstens eines in diese eingekoppelten Energiestrahls zwischen einem Einkoppelbereich der Lichtleitfaser und einem Auskoppelbereich der Lichtleitfaser eingerichtet.

Dass entsprechende Vorrichtungen insbesondere im Hinblick auf Aspekte wie Bauteil- und Prozessqualität, Effizienz, Produktivität, etc. stetig weiterentwickelt und verbessert werden, ist ebenso bekannt. Hierbei kommt zunehmend auch der Konfiguration der jeweiligen Belichtungseinrichtungen entsprechender Vorrichtungen, d. h. insbesondere der Konfiguration entsprechender Lichtleitfasern, Bedeutung zu.

Der Erfindung liegt die Aufgabe zugrunde, eine, insbesondere im Hinblick auf die Verbesserung der Bauteil- und Prozessqualität, Effizienz sowie Produktivität einer Vorrichtung zur additiven Herstellung dreidimensionaler Objekte, verbesserte Belichtungseinrichtung für eine Vorrichtung zur additiven Herstellung dreidimensionaler Objekte anzugeben.

Die Aufgabe wird durch eine Vorrichtung zur additiven Herstellung dreidimensionaler Objekte gemäß Anspruch 1 gelöst. Die hierzu abhängigen Ansprüche betreffen mögliche Ausführungsformen der Vorrichtung.

Die hierin beschriebene Belichtungseinrichtung stellt typischerweise einen Bestandteil einer Vorrichtung ("Vorrichtung") zur additiven Herstellung dreidimensionaler Objekte dar. Vermittels einer entsprechenden Vorrichtung können herzustellende dreidimensionale Objekte durch sukzessives schichtweises selektives Belichten und damit einhergehendes sukzessives schichtweises selektives Verfestigen von Baumaterialschichten in den dem schichtbezogenen Querschnitt des herzustellenden dreidimensionalen Objekts entsprechenden Bereichen aus einem vermittels eines Energiestrahls verfestigbaren Baumaterial additiv aufgebaut werden. Eine entsprechende Vorrichtung kann z. B. als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein.

Eine entsprechende Vorrichtung umfasst die zur Durchführung additiver Bauvorgänge typischerweise erforderlichen Funktionskomponenten. Hierzu zählt neben einer Beschichtungseinrichtung, welche zur Ausbildung selektiv zu belichtender bzw. selektiv zu verfestigender Baumaterialschichten in einer Bauebene der Vorrichtung, in welcher die sukzessive schichtweise selektive Belichtung und die damit einhergehende sukzessive schichtweise selektive Verfestigung von Baumaterialschichten aus dem vermittels eines Energiestrahls verfestigbaren Baumaterial, d. h. z. B. einem Keramik-, Kunststoff- oder Metallpulver, erfolgt, auch eine entsprechende Belichtungseinrichtung, welche im Allgemeinen zur selektiven Belichtung selektiv zu verfestigender Baumaterialschichten in der Bauebene der Vorrichtung eingerichtet ist.

Die Belichtungseinrichtung umfasst als wesentliche Bestandteile wenigstens eine Energiestrahlerzeugungseinrichtung sowie wenigstens eine mit der Energiestrahlerzeugungseinrichtung optisch koppelbare oder gekoppelte Lichtleitfaser. Die Energiestrahlerzeugungseinrichtung ist zur Erzeugung eines Energiestrahls - bei dem Energiestrahl handelt es sich erfindungsgemäss um einen Laserstrahl - eingerichtet. Die Lichtleitfaser ist zur Leitung wenigstens eines in diese eingekoppelten Energiestrahls zwischen einem Einkoppelbereich der Lichtleitfaser und einem Auskoppelbereich der Lichtleitfaser eingerichtet. Die optische Kopplung der Energiestrahlerzeugungseinrichtung mit der Lichtleitfaser ermöglicht ein Einkoppeln der von der Energiestrahlerzeugungseinrichtung erzeugten Energiestrahlung, d. h. insbesondere eines von der Energiestrahlerzeugungseinrichtung erzeugten Energiestrahls, in die Lichtleitfaser. Weiterhin ist die Lichtleitfaser mit einer Strahlablenkeinrichtung (Scannereinrichtung) gekoppelt .

Die optische Kopplung der Belichtungseinrichtung mit der Strahlablenkeinrichtung ermöglicht ein Einkoppeln von Energiestrahlung, d. h. insbesondere wenigstens eines durch die Lichtleitfaser geleiteten Energiestrahls, von der Lichtleitfaser in die Strahlablenkeinrichtung. Die Lichtleitfaser kann sonach zwischen die Energiestrahlerzeugungseinrichtung und eine Strahlablenkeinrichtung, welche gegebenenfalls ebenso einen Bestandteil der Belichtungseinrichtung darstellt, geschaltet angeordnet oder ausgebildet sein.

Die Lichtleitfaser umfasst mehrere Faserkerne, wobei in jeden Faserkern wenigstens ein Energiestrahl einkoppelbar oder eingekoppelt ist. Die Lichtleitfaser wird insofern als Multikernfaser bezeichnet bzw. erachtet .

Jeder Faserkern ist aus einem lichtleitenden Material, d. h. z. B. einem Glasfasermaterial, gebildet und weist damit lichtleitende Eigenschaften auf; jeder Faserkern ist damit als gesondertes Lichtleiterelement (innerhalb) der Lichtleitfaser zu bezeichnen bzw. zu erachten. Jeder Faserkern umfasst einen Faserkerneinkoppelbereich, über welchen ein Energiestrahl in den jeweiligen Faserkern einkoppelbar bzw. eingekoppelt ist, und einen Faserkernauskoppelbereich, über welchen ein in den jeweiligen Faserkern eingekoppelter Energiestrahl aus dem jeweiligen Faserkern auskoppelbar bzw. ausgekoppelt ist. Ein jeweiliger Faserkerneinkoppelbereich bildet typischerweise einen Teil des Einkoppelbereichs der Lichtleitfaser, ein jeweiliger Faserkernauskoppelbereich bildet typischerweise einen Teil des Auskoppelbereichs der Lichtleitfaser.

Die Lichtleitfaser weist typischerweise eine kabelartige bzw. -förmige, d. h. im Allgemeinen eine längliche, geometrische Gestalt auf. Ein jeweiliger Faserkern weist typischerweise eine faserartige bzw. -förmige, d. h. im Allgemeinen eine längliche, geometrische Gestalt auf. Die jeweilige Querschnittsgeometrie der Faserkerne ist typischerweise deutlich kleiner als die Querschnittsgeometrie der Lichtleitfaser, sodass die Faserkerne ohne weiteres innerhalb der Lichtleitfaser angeordnet oder ausgebildet sein können. Eine (positionsstabile) Anordnung der Faserkerne innerhalb der Lichtleitfaser kann z. B. durch ein Einbetten der Faserkerne in ein die Lichtleitfaser bildendes Lichtleitfasermaterial, d. h. z. B. ein Kunststoffmaterial, realisiert sein.

Durch die Ausbildung der Lichtleitfaser mit mehreren gesonderten Faserkernen ist es möglich, in die Lichtleitfaser mehrere, wie sich im Weiteren ergibt, gegebenenfalls hinsichtlich wenigstens eines Energiestrahlparameters, d. h. z. B. der Intensität, unterschiedliche, Energiestrahlen einzukoppeln bzw. aus der Lichtleitfaser bzw. der Belichtungseinrichtung mehrere, gegebenenfalls hinsichtlich wenigstens eines Energiestrahlparameters unterschiedliche, Energiestrahlen auszukoppeln. Derart lässt sich mit ein und derselben Lichtleitfaser ein variierbares bzw. variables Profil der insgesamt aus der Belichtungseinrichtung auskoppelbaren bzw. ausgekoppelten Energiestrahlung realisieren. Dies ermöglicht im Allgemeinen eine gezielte und effektive Nutzung der über die Energiestrahlerzeugungseinrichtung in die Lichtleitfaser eingekoppelten Energiestrahlung; im Besonderen ist, wie sich im Weiteren ergibt, z. B. eine gezielte thermische Vor- und/oder Nachbehandlung einer selektiv zu verfestigenden bzw. selektiv verfestigten Baumaterialschicht sowie eine gezielte Erzeugung bestimmter Strahlungsprofile ermöglicht. Die Belichtungseinrichtung ist damit verbessert, was sich insbesondere daraus ergibt, dass diese eine verbesserte Bauteil- und Prozessqualität, Effizienz, Produktivität einer mit der Belichtungseinrichtung ausgestatteten Vorrichtung ermöglicht. Durch die durch die Mehrzahl an Faserkernen gegebene Möglichkeit der Auskopplung mehrerer Energiestrahlen aus der Lichtleitfaser - die maximale Anzahl der aus der Lichtleitfaser auskoppelbaren Energiestrahlen entspricht dabei der Anzahl der Faserkerne - ermöglicht die Belichtungseinrichtung zudem höhere Bauraten.

Hinsichtlich der Kopplung der wenigstens einen Lichtleitfaser mit der wenigstens einen Energiestrahlerzeugungseinrichtung bestehen grundsätzlich zwei mögliche Varianten; die wenigstens eine Lichtleitfaser kann direkt oder indirekt, d. h. unter Zwischenschaltung wenigstens eines Bauteils bzw. wenigstens einer Bauteilgruppe, mit der wenigstens einen Energiestrahlerzeugungseinrichtung koppelbar oder gekoppelt sein.

Die Variante, gemäß welcher eine Lichtleitfaser direkt mit der Energiestrahlerzeugungseinrichtung optisch koppelbar oder gekoppelt ist, beinhaltet insbesondere auch die Möglichkeit, dass die Lichtleitfaser mit mehreren Energiestrahlerzeugungseinrichtungen optisch koppelbar oder gekoppelt ist, wobei jeder Faserkern der Lichtleitfaser mit wenigstens einer bestimmten Energiestrahlerzeugungseinrichtung der mehreren Energiestrahlerzeugungseinrichtungen optisch koppelbar bzw. gekoppelt ist. Mithin kann in jeden Faserkern ein von der mit diesem optisch koppelbaren bzw. gekoppelten Energiestrahlerzeugungseinrichtung ausgehender Energiestrahl einkoppelbar bzw. eingekoppelt sein.

Jeweilige von jeweiligen Energiestrahlerzeugungseinrichtungen erzeugten Energiestrahlen können sich in wenigstens einem Energiestrahlparameter, d. h. z. B. der Intensität, unterscheiden. Derart ist es möglich, in die Lichtleitfaser mehrere, gegebenenfalls hinsichtlich wenigstens eines Energiestrahlparameters unterschiedliche, Energiestrahlen einzukoppeln bzw. aus der Lichtleitfaser bzw. der Belichtungseinrichtung mehrere, gegebenenfalls hinsichtlich wenigstens eines Energiestrahlparameters unterschiedliche, Energiestrahlen auszukoppeln. Jeweilige mit der Lichtleitfaser optisch koppelbare bzw. gekoppelte Energiestrahlerzeugungseinrichtungen können, insbesondere im Hinblick auf die Strahleigenschaften der über diese jeweils erzeugten Energiestrahlen, einzeln bzw. individuell derart ausgebildet sein, dass über jede Energiestrahlerzeugungseinrichtung ein Energiestrahl mit bestimmten Energiestrahleigenschaften in die Lichtleitfaser einkoppelbar ist.

Die Variante, gemäß welcher eine Lichtleitfaser indirekt mit der Energiestrahlerzeugungseinrichtung optisch koppelbar oder gekoppelt ist, beinhaltet die Möglichkeit, dass die Lichtleitfaser unter Zwischenschaltung wenigstens einer Energiestrahlaufteilungseinrichtung, welche zur Aufteilung eines in diese eingekoppelten Energiestrahls in mehrere Energiestrahlen eingerichtet ist, mit der wenigstens einen Energiestrahlerzeugungseinrichtung optisch koppelbar oder gekoppelt ist. Die Energiestrahlaufteilungseinrichtung umfasst typischerweise wenigstens ein, insbesondere optisches, Energiestrahlaufteilungselement. Bei einem entsprechenden Energiestrahlaufteilungselement kann es sich z. B. um einen optischen Strahlteiler(würfel) handeln. Jeder Faserkern der Lichtleitfaser kann hierbei mit wenigstens einem Auskoppelbereich der Energiestrahlaufteilungseinrichtung, aus welchem ein Energiestrahl auskoppelbar oder ausgekoppelt ist, optisch koppelbar oder gekoppelt sein, wobei in jeden Faserkern ein von dem mit diesem koppelbaren oder gekoppelten Auskoppelbereich der Energiestrahlaufteilungseinrichtung ausgekoppelter Energiestrahl einkoppelbar bzw. eingekoppelt ist.

Die Energiestrahlaufteilungseinrichtung kann eingerichtet sein, einen Energiestrahl in mehrere, gegebenenfalls hinsichtlich wenigstens eines Energiestrahlparameters, wie erwähnt, z. B. der Intensität, unterschiedliche, Energiestrahlen aufzuteilen. Derart ist es (bereits mit einer einzigen Energiestrahlerzeugungseinrichtung) möglich, in die Lichtleitfaser mehrere, gegebenenfalls hinsichtlich wenigstens eines Energiestrahlparameters unterschiedliche, Energiestrahlen einzukoppeln bzw. aus der Lichtleitfaser bzw. der Belichtungseinrichtung mehrere, gegebenenfalls hinsichtlich wenigstens eines Energiestrahlparameters unterschiedliche, Energiestrahlen auszukoppeln. Die Energiestrahlaufteilungseinrichtung kann, z. B. durch eine geeignete Beschichtung einer Energiestrahlaufteilungsfläche, derart ausgebildet sein, dass über die Energiestrahlaufteilungseinrichtung prinzipiell unterschiedliche Energiestrahlen in die Lichtleitfaser einkoppelbar sind.

Aus vorstehenden Ausführungen ergibt sich, dass in wenigstens zwei Faserkerne der Lichtleitfaser unterschiedliche Energiestrahlen, d. h. Energiestrahlen unterschiedlicher Energiestrahleigenschaften, einkoppelbar oder eingekoppelt sein können. In einen ersten Faserkern bzw. eine Gruppe erster Faserkerne kann z. B. ein Energiestrahl bzw. können Energiestrahlen mit ersten Energiestrahleigenschaften, insbesondere einer ersten Intensität, eingekoppelt sein, in wenigstens einen weiteren Faserkern bzw. in eine Gruppe weiterer Faserkerne kann ein Energiestrahl bzw. können Energiestrahlen mit von den ersten Energiestrahleigenschaften unterschiedlichen Energiestrahleigenschaften, insbesondere einer von der ersten Intensität unterschiedlichen Intensität, eingekoppelt sein.

Unabhängig von der direkten oder indirekten Einkopplung jeweiliger Energiestrahlen in jeweilige Faserkerne der Lichtleitfaser können die Faserkerne gleiche oder unterschiedliche Faserkerngeometrien, insbesondere Faserkernquerschnittsgeometrien, aufweisen. Mithin können die über die jeweiligen Faserkerne auskoppelbaren oder ausgekoppelten Energiestrahlen gleiche oder unterschiedliche Energiestrahlgeometrien, insbesondere Energiestrahldurchmesser (Spots) bzw. Energiestrahlquerschnitte, aufweisen. Auch durch die Vorsehung von Faserkernen unterschiedlicher Faserkerngeometrien können die Eigenschaften der (insgesamt) aus der Lichtleitfaser auskoppelbaren bzw. ausgekoppelten Energiestrahlung gezielt beeinflusst werden.

Die Faserkerne sind symmetrisch über die runde bzw. rundliche, d. h. z. B. ellipsoide, Querschnittsfläche der Lichtleitfaser verteilt angeordnet. Es ist eine Lichtleitfaser mit einer runden bzw. rundlichen Querschnittsfläche mit einer Anordnung wenigstens eines ersten Faserkerns im Zentrum (bezüglich einer Symmetrie- bzw. Zentralachse) der Lichtleitfaser und eine Anordnung weiterer Faserkerne außerhalb des Zentrums der Lichtleitfaser vorgesehen.

Mithin können ausgehend von einer Lichtleitfaser mit einer runden bzw. rundlichen Querschnittsfläche Faserkerne auf unterschiedlichen radialen Positionen bezüglich der Symmetrie- bzw. Zentralachse der Lichtleitfaser angeordnet sein. Eine erste Anzahl an Faserkernen, d. h. wenigstens ein Faserkern, ist zentrisch, d. h. in der bzw. im Bereich der Symmetrie- bzw. Zentralachse der Lichtleitfaser, angeordnet und eine zweite Anzahl, d. h. insbesondere eine Mehrzahl, an Faserkernen, ist symmetrisch verteilt, um die erste Anzahl an Faserkernen angeordnet .

Auch durch eine derartige Anordnung von Faserkernen, gegebenenfalls unterschiedlicher Faserkerngeometrien, können die Eigenschaften der (insgesamt) aus der Lichtleitfaser auskoppelbaren bzw. ausgekoppelten Energiestrahlung gezielt beeinflusst werden. Unabhängig von deren jeweiliger Anordnung relativ zu einer Symmetrie- bzw. Zentralachse der Lichtleitfaser können die Faserkerne relativ zueinander äquidistant verteilt angeordnet sein. Der Abstand eines jeden Faserkerns zu jedem diesem unmittelbar benachbart angeordneten Faserkern kann damit gleich sein. Entsprechend ist auch der Abstand der aus den jeweiligen Faserkernen auskoppelbaren bzw. ausgekoppelten Energiestrahlstrahlen bzw. Spots gleich, was in homogeneren Eigenschaften der insgesamt aus der Belichtungseinrichtung auskoppelbaren bzw. ausgekoppelten Energiestrahlung, mithin in einem homogenerem Abstrahlverhalten der Belichtungseinrichtung resultiert. Gleichermaßen ist über den Querschnitt eine flächige Auskopplung von Energiestrahlung aus der Belichtungseinrichtung ermöglicht. Wie erwähnt, können in die Faserkerne der Lichtleitfaser individuell Energiestrahlen bzw. individuell Energiestrahlen unterschiedlicher Energiestrahleigenschaften, insbesondere unterschiedlicher Intensität, eingekoppelt werden. Die Belichtungseinrichtung umfasst hierfür eine hard- und/oder softwaremäßig implementierte Steuereinrichtung, welche zur Steuerung der Energiestrahlen bzw. der Energiestrahleigenschaften der in die Faserkerne der Lichtleitfaser einkoppelbaren oder eingekoppelten Energiestrahlen eingerichtet ist.

Steuereinrichtung wirkt steuerungstechnisch insbesondere mit entsprechenden Energiestrahlerzeugungseinrichtungen der Belichtungseinrichtung zusammen, um die Energiestrahlen bzw. die Energiestrahleigenschaften der aus diesen auskoppelbaren bzw. ausgekoppelten Energiestrahlen zu steuern.

Die Steuereinrichtung ist dazu eingerichtet, durch eine definierte, insbesondere örtliche und/oder zeitliche, Steuerung der Energiestrahlen bzw. der Energiestrahleigenschaften, insbesondere der Intensität, der in die Faserkerne einkoppelbaren oder eingekoppelten Energiestrahlen ein definiertes Profil, insbesondere Intensitätsprofil, der aus der Belichtungseinrichtung insgesamt auskoppelbaren oder ausgekoppelten Energiestrahlung auszubilden. Derart, d. h. insbesondere durch die individuelle Steuerung der Intensitäten der in die Faserkerne einkoppelbaren oder eingekoppelten Energiestrahlen, können prinzipiell (nahezu) beliebige Profile ("Beam-Shaping") erzeugt und aus der Lichtleitfaser ausgekoppelt werden, sodass lediglich beispielhaft auf Gauß-, inverse Gauß-, Top-Hat-Profile verwiesen wird.

Die Steuereinrichtung ist ferner dazu eingerichtet, durch eine definierte, insbesondere örtliche und/oder zeitliche, Steuerung der Energiestrahlen bzw. der Energiestrahleigenschaften der in die Faserkerne der Lichtleitfaser einkoppelbaren oder eingekoppelten Energiestrahlen ein bestimmtes Belichtungsmuster der aus der Belichtungseinrichtung insgesamt auskoppelbaren oder ausgekoppelten Energiestrahlung auszubilden. Derart können prinzipiell (nahezu) beliebige Belichtungsmuster erzeugt werden. Entsprechende Belichtungsmuster können der Realisierung bestimmter Belichtungsstrategien, d. h. z. B. der so genannten Chase-Strategie, die nicht Teil der beanspruchten Erfindung ist, gemäß welcher ein zweiter Energiestrahl einem ersten Energiestrahl nachgeführt wird und vermittels welcher sich eine thermische Nachbehandlung einer selektiv verfestigten Baumaterialschicht realisieren lässt, und der erfindungsgemässen Wobble-Strategie, gemäß welcher Energiestrahlen um einen bestimmten zu belichtenden Bereich einer Baumaterialschicht bewegt werden, zugrunde gelegt werden. Über entsprechende Belichtungsmuster bzw. Belichtungsstrategien können allgemein auch Einzel- oder Mehrfachbelichtungen bestimmter zu belichtender Bereiche einer Baumaterialschicht realisiert werden.

Es wurde bereits erwähnt, dass sich mit der Lichtleitfaser eine thermische Vor- und/oder Nachbehandlung einer selektiv zu verfestigenden bzw. selektiv verfestigten

Baumaterialschicht realisieren lassen. Die Steuereinrichtung kann hierfür eingerichtet sein, durch eine definierte Steuerung der der Energiestrahlen bzw. der Energiestrahleigenschaften der in die Faserkerne der Lichtleitfaser einkoppelbaren oder eingekoppelten Energiestrahlen, über wenigstens einen aus wenigstens einem ersten Faserkern auskoppelbaren oder ausgekoppelten ersten Energiestrahl eine selektive Belichtung und eine damit einhergehende selektive Verfestigung einer Baumaterialschicht zu realisieren und über einen aus wenigstens einem weiteren Faserkern auskoppelbaren oder ausgekoppelten weiteren Energiestrahl eine zumindest abschnittsweise thermische Vorbehandlung einer selektiv zu verfestigenden Baumaterialschicht und/oder eine zumindest abschnittsweise thermische Nachbehandlung einer selektiv verfestigten Baumaterialschicht zu realisieren. Der Energiestrahl zur selektiven Belichtung und damit einhergehenden selektiven Verfestigung einer Baumaterialschicht kann z. B. aus wenigstens einem mittig bzw. zentrisch bezüglich der Querschnittsgeometrie der Lichtleitfaser angeordneten Faserkern ausgekoppelt werden, der bzw. ein Energiestrahl zur thermischen Vorbehandlung einer selektiv zu verfestigenden Baumaterialschicht bzw. zur thermischen Nachbehandlung einer selektiv verfestigten Baumaterialschicht kann aus wenigstens einem außermittig bzw. außerzentrisch bezüglich der Querschnittsgeometrie der Lichtleitfaser angeordneten Faserkern ausgekoppelt werden.

Neben der Belichtungseinrichtung betrifft die Erfindung eine Vorrichtung zur additiven Herstellung dreidimensionaler Objekte durch sukzessives schichtweises selektives Belichten und damit einhergehendes sukzessives schichtweises selektives Verfestigen von Baumaterialschichten aus einem vermittels eines Energiestrahls verfestigbaren Baumaterial. Die Vorrichtung umfasst wenigstens eine wie beschriebene Belichtungseinrichtung, sodass sämtliche Ausführungen im Zusammenhang mit der Belichtungseinrichtung analog für die Vorrichtung gelten. Bei der Vorrichtung kann es sich insbesondere um eine SLM-Vorrichtung, d. h. eine Vorrichtung zur Durchführung selektiver Laserschmelzverfahren (SLM-Verfahren), oder um eine SLS-Vorrichtung, d. h. eine Vorrichtung zur Durchführung selektiver Lasersinterverfahren (SLS-Verfahren), handeln.

US2014/0263209A1 offenbart eine Herstellungsvorrichtung mit einem Materialverteiler, einem Laserausgang, Lichtleitfasern, Fokussiereinrichtungen und einem Spiegelscanner, die ein Lichtmuster auf einem Plattform mit darauf verteiltem Material erzeugen kann.

Die Erfindung ist anhand von Ausführungsbeispielen in den Zeichnungsfiguren näher erläutert. Dabei zeigt:
- Fig. 1, 2: je eine Prinzipdarstellung einer Vorrichtung gemäß einem Ausführungsbeispiel in einer schematischen Ansicht;
- Fig. 3 - 8: je eine Prinzipdarstellung einer Lichtleitfaser gemäß einem Ausführungsbeispiel in einer quergeschnittenen Ansicht.

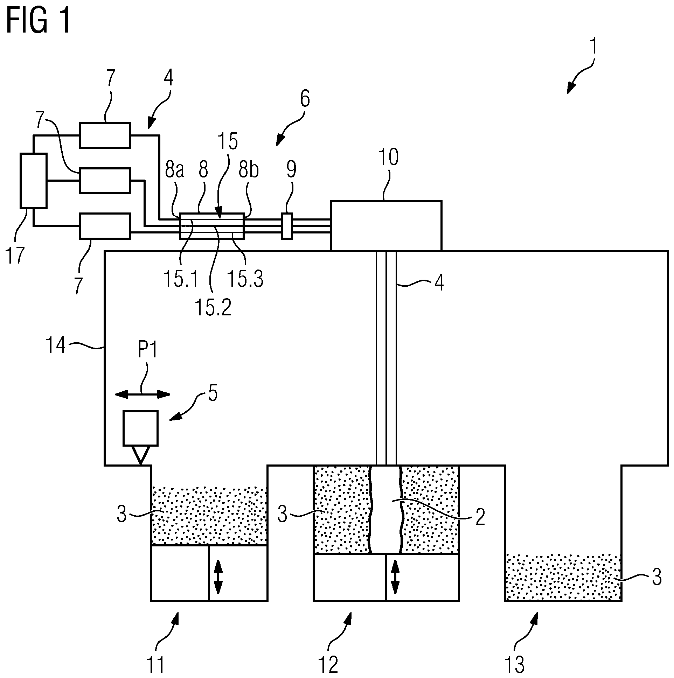

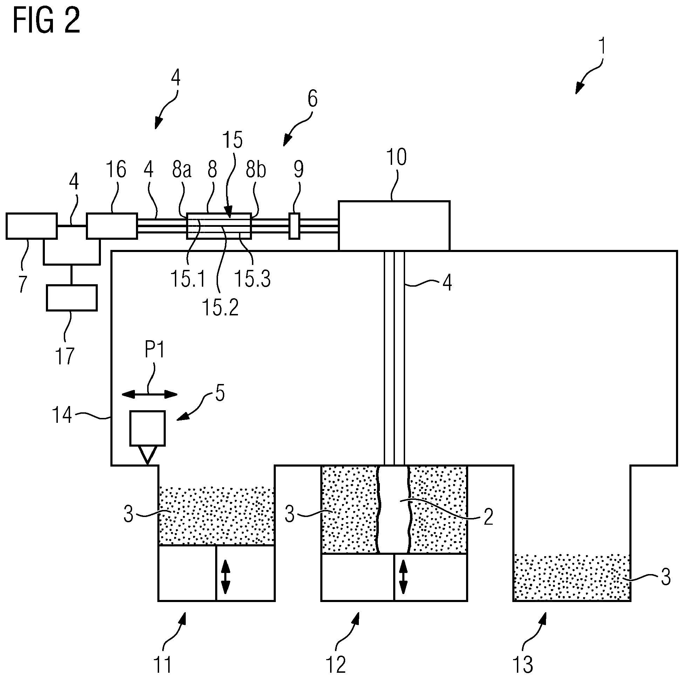

Die Fig. 1, 2 zeigen je eine Prinzipdarstellung einer Vorrichtung 1 gemäß einem Ausführungsbeispiel in einer schematischen Ansicht.

Die in den Fig. 1, 2 gezeigten Vorrichtungen 1 dienen der additiven Herstellung dreidimensionaler Objekte 2, d. h. insbesondere technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial 3, d. h. z. B. eines Metallpulvers, vermittels wenigstens eines Energiestrahls 4, d. h. insbesondere eines Laserstrahls. Die selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2 und können beispielsweise "geslicte" CAD-Daten des herzustellenden Objekts 2 beinhalten. Die Vorrichtungen 1 können z. B. als Laser-CUSING^{®}-Vorrichtungen, d. h. als Vorrichtungen zur Durchführung selektiver Laserschmelzverfahren (SLM-Verfahren), ausgebildet sein.

Die Vorrichtungen 1 umfassen die zur Durchführung additiver Bauvorgänge erforderlichen Funktionskomponenten; in den Fig. 1, 2 ist beispielsweise jeweils eine Beschichtungseinrichtung 5 und eine Belichtungseinrichtung 6 gezeigt.

Die Beschichtungseinrichtung 5 ist zur Ausbildung selektiv zu belichtender bzw. selektiv zu verfestigender Baumaterialschichten in einer Bauebene E der Vorrichtungen 1 eingerichtet und umfasst hierzu ein - wie durch die jeweiligen Doppelpfeile P1 angedeutet - relativ zu der Bauebene E der Vorrichtungen 1 bewegbar gelagertes, insbesondere klingenartiges bzw. -förmiges, Beschichtungselement (nicht näher bezeichnet).

Die Belichtungseinrichtung 6 ist zur selektiven Belichtung selektiv zu verfestigender Baumaterialschichten in der Bauebene E der Vorrichtungen 1 eingerichtet und umfasst hierfür wenigstens eine Energiestrahlerzeugungseinrichtung 7, eine mit der wenigstens einen Energiestrahlerzeugungseinrichtung 7 optisch gekoppelte Lichtleitfaser 8, eine mit der Lichtleitfaser 8 optisch gekoppelte Fokussiereinrichtung 9 (optional), sowie eine mit der Fokussiereinrichtung 9 optisch gekoppelte Strahlablenkeinrichtung 10 (Scannereinrichtung). Eine jeweilige Energiestrahlerzeugungseinrichtung 7 ist zur Erzeugung eines Energiestrahls 4 eingerichtet, die Lichtleitfaser 8 ist zur Leitung eines aus einer Energiestrahlerzeugungseinrichtung 7 in diese eingekoppelten Energiestrahls 4 zwischen einem Einkoppelbereich 8a und einem Auskoppelbereich 8b der Lichtleitfaser 8 eingerichtet, die Fokussiereinrichtung 9 ist zur Fokussierung der in diese eingekoppelten Energiestrahlen 4 und die Strahlablenkeinrichtung 10 zur Ablenkung der in diese eingekoppelten Energiestrahlen 4 auf die zu belichtenden Bereiche einer selektiv zu belichtenden bzw. selektiv zu verfestigenden Baumaterialschicht eingerichtet. Wenngleich in den Fig. 1, 2 schematisch durch Linien verbunden, sind die genannten Bestandteile der Belichtungseinrichtung 6 typischerweise direkt miteinander gekoppelt.

In den Fig. 1, 2 ist ferner ein Dosiermodul 11, ein Baumodul 12 und ein Überlaufmodul 13 dargestellt, welche an einen unteren Bereich einer inertisierbaren Prozesskammer 14 der Vorrichtung 1 angedockt sind. Die genannten Module 11, 12, 13 können auch einen unteren Bereich der Prozesskammer 14 der Vorrichtung 1 bilden.

Die optische Kopplung der jeweiligen Energiestrahlerzeugungseinrichtungen 7 - ersichtlich sind in Fig. 1 mehrere Energiestrahlerzeugungseinrichtungen 7 und in Fig. 2 eine (einzige) Energiestrahlerzeugungseinrichtung 7 gezeigt - mit der Lichtleitfaser 8 ermöglicht ein Einkoppeln der von den jeweiligen Energiestrahlerzeugungseinrichtungen 7 erzeugten Energiestrahlen 4 in die Lichtleitfaser 8.

Die Lichtleitfaser 8 umfasst mehrere, d. h. in den Fig. 1, 2 beispielhaft drei Faserkerne 15.1 - 15.3, in den übrigen Fig. beispielhaft sieben Faserkerne 15.1 - 15.7, wobei in jeden Faserkern 15 wenigstens ein Energiestrahl 4 einkoppelbar oder eingekoppelt ist. Die Lichtleitfaser 8 kann insofern als Multikernfaser bezeichnet werden. Jeder Faserkern 15 ist aus einem lichtleitenden Material, d. h. z. B. einem Glasfasermaterial, gebildet und weist damit lichtleitende Eigenschaften auf; jeder Faserkern 15 ist damit als gesondertes Lichtleiterelement (innerhalb) der Lichtleitfaser 8 zu erachten. Jeder Faserkern 15 umfasst einen Faserkerneinkoppelbereich (nicht bezeichnet), über welchen ein Energiestrahl 4 in den jeweiligen Faserkern 15 einkoppelbar bzw. eingekoppelt ist, und einen Faserkernauskoppelbereich, über welchen ein in den jeweiligen Faserkern 15 eingekoppelter Energiestrahl 4 aus dem jeweiligen Faserkern 15 auskoppelbar bzw. ausgekoppelt ist. Ein jeweiliger Faserkerneinkoppelbereich bildet den bzw. einen Teil des Einkoppelbereichs 8a der Lichtleitfaser 8, ein jeweiliger Faserkernauskoppelbereich bildet den bzw. einen Teil des Auskoppelbereichs 8b der Lichtleitfaser 8.

Die Lichtleitfaser 8 weist eine kabelartige bzw. -förmige, d. h. im Allgemeinen eine längliche, geometrische Gestalt auf. Die jeweiligen Faserkerne 15 weisen eine faserartige bzw. -förmige, d. h. im Allgemeinen eine längliche, geometrische Gestalt auf. Die jeweilige Querschnittsgeometrie der Faserkerne 15 ist deutlich kleiner als die Querschnittsgeometrie der Lichtleitfaser 8, sodass die Faserkerne 15 ohne weiteres innerhalb der Lichtleitfaser 8 angeordnet bzw. ausgebildet sein können.

Durch die Ausbildung der Lichtleitfaser 8 mit mehreren gesonderten Faserkernen 15 ist es möglich, in die Lichtleitfaser 8 mehrere Energiestrahlen 4 einzukoppeln bzw. aus der Lichtleitfaser 8 und somit aus der Belichtungseinrichtung 6 mehrere Energiestrahlen 4 auszukoppeln. Derart lässt sich mit ein und derselben Lichtleitfaser 8 ein variierbares bzw. variables Profil der insgesamt aus der Belichtungseinrichtung 6 auskoppelbaren bzw. ausgekoppelten Energiestrahlung realisieren.

Hinsichtlich der Kopplung der einen Lichtleitfaser 8 mit entsprechenden Energiestrahlerzeugungseinrichtungen 7 bestehen grundsätzlich zwei mögliche Varianten; die Lichtleitfaser 8 kann, wie in Fig. 1 gezeigt, direkt oder, wie in Fig. 2 gezeigt, indirekt mit einer Energiestrahlerzeugungseinrichtung 7 koppelbar oder gekoppelt sein.

Die Variante, gemäß welcher die Lichtleitfaser 8 direkt mit den Energiestrahlerzeugungseinrichtungen 7 optisch gekoppelt ist, beinhaltet, wie in Fig. 1 gezeigt, die Möglichkeit, dass die Lichtleitfaser 8 mit mehreren Energiestrahlerzeugungseinrichtungen 7 optisch gekoppelt ist. Ersichtlich ist dabei jeder Faserkern 15 der Lichtleitfaser 8 mit einer bestimmten Energiestrahlerzeugungseinrichtung 7 optisch gekoppelt. Mithin ist in jeden Faserkern 15 ein von der mit diesem optisch gekoppelten Energiestrahlerzeugungseinrichtung 7 ausgehender Energiestrahl 4 eingekoppelt.

Jeweilige von jeweiligen Energiestrahlerzeugungseinrichtungen 7 erzeugten Energiestrahlen 4 können sich in wenigstens einem Energiestrahlparameter, d. h. z. B. der Intensität, unterscheiden. Es ist also möglich, in die Lichtleitfaser 8 mehrere, gegebenenfalls hinsichtlich wenigstens eines Energiestrahlparameters unterschiedliche, Energiestrahlen 4 einzukoppeln bzw. aus der Lichtleitfaser 8 mehrere, gegebenenfalls hinsichtlich wenigstens eines Energiestrahlparameters unterschiedliche, Energiestrahlen 4 auszukoppeln. Die mit der Lichtleitfaser 8 optisch gekoppelten Energiestrahlerzeugungseinrichtungen 7 können sonach, insbesondere im Hinblick auf die Strahleigenschaften der über diese jeweils erzeugten Energiestrahlen 4, einzeln bzw. individuell derart ausgebildet sein, dass über jede Energiestrahlerzeugungseinrichtung 7 ein Energiestrahl 4 mit bestimmten Energiestrahleigenschaften in die Lichtleitfaser 8 einkoppelbar ist.

Die Variante, gemäß welcher die Lichtleitfaser 8 indirekt mit der Energiestrahlerzeugungseinrichtung 7 optisch gekoppelt ist, beinhaltet die in Fig. 2 gezeigte Möglichkeit, dass die Lichtleitfaser 8 unter Zwischenschaltung einer Energiestrahlaufteilungseinrichtung 16 mit der Energiestrahlerzeugungseinrichtung 7 optisch gekoppelt ist. Die Energiestrahlaufteilungseinrichtung 16 ist zur Aufteilung eines in diese eingekoppelten Energiestrahls 4 in mehrere Energiestrahlen 4 eingerichtet und umfasst hierfür ein, insbesondere optisches, Energiestrahlaufteilungselement (nicht gezeigt), bei welchem es sich z. B. um einen optischen Strahlteiler(würfel) handeln kann. Jeder Faserkern 15 der Lichtleitfaser 8 ist hierbei mit einem Auskoppelbereich (nicht bezeichnet) der Energiestrahlaufteilungseinrichtung 16, aus welchem ein Energiestrahl 4 auskoppelbar oder ausgekoppelt ist, optisch gekoppelt. Mithin ist in jeden Faserkern 15 ein von dem mit diesem gekoppelten Auskoppelbereich der Energiestrahlaufteilungseinrichtung 16 ausgekoppelter Energiestrahl 4 eingekoppelt.

Die Energiestrahlaufteilungseinrichtung 16 kann eingerichtet sein, einen Energiestrahl 4 in mehrere hinsichtlich wenigstens eines Energiestrahlparameters, wie erwähnt, z. B. der Intensität, unterschiedliche, Energiestrahlen 4 aufzuteilen. Derart ist es, wie in Fig. 2 gezeigt, bereits mit einer einzigen Energiestrahlerzeugungseinrichtung 7 möglich, in die Lichtleitfaser 8 mehrere hinsichtlich wenigstens eines Energiestrahlparameters unterschiedliche Energiestrahlen 4 einzukoppeln bzw. aus der Lichtleitfaser 8 bzw. der Belichtungseinrichtung 6 mehrere hinsichtlich wenigstens eines Energiestrahlparameters unterschiedliche Energiestrahlen 4 auszukoppeln. Die Energiestrahlaufteilungseinrichtung 16 kann, z. B. durch eine geeignete Beschichtung einer Energiestrahlaufteilungsfläche, derart ausgebildet sein, dass über diese prinzipiell unterschiedliche Energiestrahlen 4 in die Lichtleitfaser 8 einkoppelbar sind.

Mithin können in wenigstens zwei Faserkerne 15 der Lichtleitfaser 8 unterschiedliche Energiestrahlen 4, d. h. Energiestrahlen 4 unterschiedlicher Energiestrahleigenschaften, einkoppelbar sein. In einen ersten Faserkern 15 kann z. B. ein Energiestrahl 4 mit ersten Energiestrahleigenschaften, insbesondere einer ersten Intensität, eingekoppelt sein, in wenigstens einen weiteren Faserkern 15 kann ein Energiestrahl 4 mit von den ersten Energiestrahleigenschaften unterschiedlichen Energiestrahleigenschaften, insbesondere einer von der ersten Intensität unterschiedlichen Intensität, eingekoppelt sein.

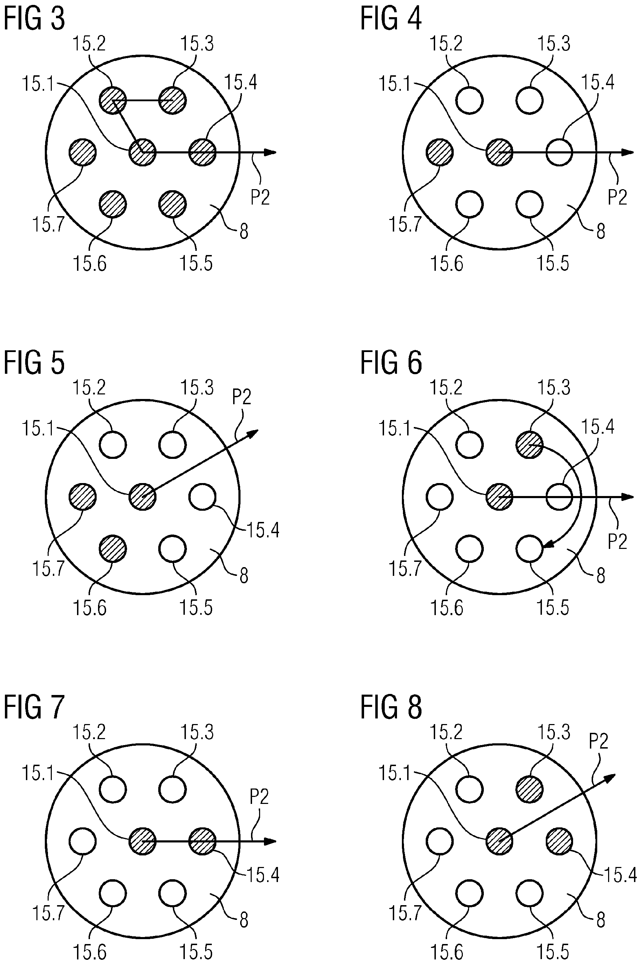

Die Fig. 3 - 8 zeigen jeweils eine Prinzipdarstellung einer Lichtleitfaser 8 gemäß einem Ausführungsbeispiel in einer quergeschnittenen Ansicht. Wie erwähnt, weist die in den Fig. 3 - 8 gezeigte Lichtleitfaser 8 beispielhaft sieben Faserkerne 15 (15.1 - 15.7) auf. Anzumerken ist, dass in den Fig. 3 - 8 jeweilige ausgefüllt gezeichnete Faserkerne 15 in einem Zustand, in welchem aus diesen ein Energiestrahl 4 ausgekoppelt wird, und jeweilige nicht ausgefüllt gezeichnete Faserkerne 15 in einem Zustand, in welchem aus diesen kein Energiestrahl 4 ausgekoppelt wird, dargestellt sind. Weiterhin anzumerken ist, dass durch die Pfeile P2 jeweils die Ablenk- bzw. Scanrichtung der insgesamt aus der Belichtungseinrichtung 6 ausgekoppelten Energiestrahlung dargestellt ist.

Anhand der Fig. 3 - 8 ist ersichtlich, dass die Faserkerne 15 der Lichtleitfaser 8 gleiche Faserkern(querschnitts)geometrien aufweisen können; mithin die über die jeweiligen Faserkerne 15 ausgekoppelten Energiestrahlen 4 gleiche Energiestrahlgeometrien, insbesondere Energiestrahldurchmesser (Spots) bzw. Energiestrahlquerschnitte, aufweisen. Prinzipiell ist es jedoch auch möglich, dass die Faserkerne 15 der Lichtleitfaser 8 unterschiedliche Faserkern(querschnitts)geometrien aufweisen; mithin die über die jeweiligen Faserkerne 15 ausgekoppelten Energiestrahlen 4 unterschiedliche Energiestrahlgeometrien, insbesondere Energiestrahldurchmesser (Spots) bzw. Energiestrahlquerschnitte, aufweisen.

Anhand der Fig. 3 - 8 ist ferner ersichtlich, dass die Faserkerne 15 symmetrisch über die hier beispielhaft runde Querschnittsfläche der Lichtleitfaser 8 verteilt angeordnet sein können. In den Fig. 3 - 8 ist jeweils ein Ausführungsbeispiel einer Lichtleitfaser 8 mit einer runden Querschnittsfläche mit einer Anordnung eines ersten Faserkerns 15.1 im Zentrum (bezüglich einer Symmetrie- bzw. Zentralachse) der Lichtleitfaser 8 und einer Anordnung weiterer Faserkerne 15.2 - 15.7 außerhalb des Zentrums der Lichtleitfaser 8 gezeigt. Mithin sind die Faserkerne 15.1 und 15.2 - 15.7 auf unterschiedlichen radialen Positionen bezüglich der Symmetrie- bzw. Zentralachse der Lichtleitfaser 8 angeordnet. Ein erster Faserkern 15.1 ist zentrisch, d. h. in der bzw. im Bereich der Symmetrie- bzw. Zentralachse der Lichtleitfaser 8, angeordnet, die übrigen Faserkerne 15.2 - 15.7 sind symmetrisch verteilt, um den Faserkern 15.1 angeordnet. Weiter ist anhand der Fig. 3 - 8 ersichtlich, dass die Faserkerne 15.1 - 15.7 relativ zueinander äquidistant verteilt angeordnet sein können. Der Abstand eines jeden Faserkerns 15.1 - 15.7 zu jedem diesem unmittelbar benachbart angeordneten Faserkern 15.1 - 15.7 ist in den Fig. 3 - 8 gleich. Konkret können die Faserkerne 15.1 - 15.7 z. B. in einem Abstand von ca. 200 µm relativ zueinander angeordnet sein. Wie erwähnt, können in die Faserkerne 15.1 - 15.7 der Lichtleitfaser 8 individuell Energiestrahlen 4 bzw. individuell Energiestrahlen 4 unterschiedlicher Energiestrahleigenschaften, d. h. z. B. unterschiedlicher Intensität, eingekoppelt werden. Die Belichtungseinrichtung 6 bzw. die Vorrichtung 1 umfasst hierfür eine hard- und/oder softwaremäßig implementierte Steuereinrichtung 17, welche zur Steuerung der Energiestrahlen 4 bzw. der Energiestrahleigenschaften der in die Faserkerne 15.1 - 15.7 der Lichtleitfaser 8 einkoppelbaren bzw. eingekoppelten Energiestrahlen 4 eingerichtet ist. Die in den Fig. 1, 2 gezeigte Steuereinrichtung 17 wirkt steuerungstechnisch insbesondere mit den Energiestrahlerzeugungseinrichtungen 7 der Belichtungseinrichtung 6 zusammen, um die Energiestrahlen 4 bzw. die Energiestrahleigenschaften der aus diesen auskoppelbaren bzw. ausgekoppelten Energiestrahlen 4 zu steuern.

Die Steuereinrichtung 17 ist eingerichtet, durch eine definierte, insbesondere örtliche und/oder zeitliche, Steuerung der Energiestrahlen 4 bzw. der Energiestrahleigenschaften, insbesondere der Intensität, der in die Faserkerne 15.1 - 15.7 eingekoppelten Energiestrahlen 4 ein definiertes Profil, insbesondere Intensitätsprofil, der aus der Belichtungseinrichtung 6 insgesamt auskoppelbaren oder ausgekoppelten Energiestrahlung 4 auszubilden. Derart, d. h. insbesondere durch die individuelle Steuerung der Intensitäten der in die Faserkerne 15.1 - 15.7 eingekoppelten Energiestrahlen 4, können verschiedene Profile ("Beam-Shaping") erzeugt und aus der Lichtleitfaser 8 ausgekoppelt werden, sodass lediglich beispielhaft auf Gauß-, inverse Gauß-, Top-Hat-Profile verwiesen wird.

Die Steuereinrichtung 17 ist ferner dazu eingerichtet, durch eine definierte, insbesondere örtliche und/oder zeitliche, Steuerung der Energiestrahlen 4 bzw. der Energiestrahleigenschaften der in die Faserkerne 15.1 - 15.7 der Lichtleitfaser 8 eingekoppelten Energiestrahlen 4 ein bestimmtes Belichtungsmuster der aus der Belichtungseinrichtung 6 insgesamt auskoppelbaren oder ausgekoppelten Energiestrahlung auszubilden. Derart können verschiedene Belichtungsmuster erzeugt werden. Entsprechende Belichtungsmuster können der Realisierung bestimmter Belichtungsstrategien, d. h. z. B. der so genannten Chase-Strategie, gemäß welcher ein zweiter Energiestrahl 4 einem ersten Energiestrahl 4 nachgeführt wird, oder der Wobble-Strategie, gemäß welcher Energiestrahlen 4 um einen bestimmten zu belichtenden Bereich einer Baumaterialschicht bewegt werden, zugrunde gelegt werden. Vermittels entsprechenden Belichtungsstrategien lassen sich z. B. thermische Vorbehandlungen selektiv zu verfestigender Baumaterialschichten bzw. thermische Nachbehandlungen selektiv verfestigter Baumaterialschichten realisieren.

In Fig. 4 ist beispielsweise die Realisierung der nicht in der beanspruchten Erfindung enthaltenen Chase-Strategie angedeutet, da der aus dem Faserkern 15.7 ausgekoppelte Energiestrahl 4 dem aus dem Faserkern 15.1 ausgekoppelten Energiestrahl 4 nachfolgt. Vermittels der Chase-Strategie lässt sich eine thermische Nachbehandlung einer selektiv verfestigten Baumaterialschicht realisieren.

In Fig. 6 ist die Realisierung der Wobble-Strategie angedeutet, da die aus den Faserkernen 15.1, 15.3 und 15.5 ausgekoppelten Energiestrahlen 4, z. B. durch wechselweise Inbetriebnahme der mit den Faserkernen 15.1, 15.3 und 15.5 gekoppelten Energiestrahlerzeugungseinrichtungen 7, um einen bestimmten zu belichtenden Bereich bewegt werden.

Über entsprechende Belichtungsmuster bzw. Belichtungsstrategien können allgemein auch Einzel- oder Mehrfachbelichtungen bestimmter zu belichtender Bereiche realisiert werden.

Anhand der Fig. 5, 7, 8 ist ersichtlich, dass die Steuereinrichtung 17 eingerichtet sein kann, durch eine definierte Steuerung der der Energiestrahlen 4 bzw. der Energiestrahleigenschaften der in die Faserkerne 15.1 - 15.7 der Lichtleitfaser 8 eingekoppelten Energiestrahlen 4, über wenigstens einen aus wenigstens einem ersten Faserkern 15.1 ausgekoppelten ersten Energiestrahl 4 eine selektive Belichtung und eine damit einhergehende selektive Verfestigung einer Baumaterialschicht zu realisieren und über einen aus wenigstens einem weiteren Faserkern 15.3, 15.4, 15.6, 15.7 ausgekoppelten weiteren Energiestrahl 4 eine zumindest abschnittsweise thermische Vorbehandlung einer selektiv zu verfestigenden Baumaterialschicht und/oder eine zumindest abschnittsweise thermische Nachbehandlung einer selektiv verfestigten Baumaterialschicht zu realisieren. Der Energiestrahl 4 zur selektiven Belichtung und damit einhergehenden selektiven Verfestigung einer Baumaterialschicht ist in den Fig. 5, 7, 8 aus dem mittig bzw. zentrisch bezüglich der Querschnittsgeometrie der Lichtleitfaser 8 angeordneten Faserkern 15.1 ausgekoppelt, die Energiestrahlen 4 zur thermischen Vorbehandlung einer selektiv zu verfestigenden Baumaterialschicht bzw. zur thermischen Nachbehandlung einer selektiv verfestigten Baumaterialschicht sind in den Fig. 5, 7, 8 aus den außermittig bzw. außerzentrisch bezüglich der Querschnittsgeometrie der Lichtleitfaser 8 angeordneten Faserkernen 15.3, 15.4, 15.6, 15.7 ausgekoppelt; konkret zeigt Fig. 5 eine thermische Nachbehandlung, was sich aus der Anordnung der Faserkerne 15.1, 15.6, 15.7 relativ zu der Scanrichtung, vgl. Pfeil P2, ergibt, und die Fig. 7, 8 jeweils eine thermische Vorbehandlung, was sich aus der Anordnung der Faserkerne 15.1, 15.3, 15.4 relativ zu der Scanrichtung, vgl. Pfeil P2, ergibt.

## Patentansprüche

1. Vorrichtung (1) zur additiven Herstellung dreidimensionaler Objekte (2) durch sukzessives schichtweises selektives Belichten und damit einhergehendes sukzessives schichtweises selektives Verfestigen von Baumaterialschichten aus einem vermittels eines Laserstrahls (4) verfestigbaren Baumaterial (3), umfassend wenigstens eine Belichtungseinrichtung (6), welche umfasst:
- mehrere Laserstrahlerzeugungseinrichtungen (7), welche zur Erzeugung eines Laserstrahls (4) eingerichtet sind,
- wenigstens eine mit den Laserstrahlerzeugungseinrichtungen (7) optisch koppelbare oder gekoppelte Multikernfaser (8), welche zur Leitung in diese eingekoppelter Laserstrahlen (4) zwischen einem Einkoppelbereich (8a) der Multikernfaser (8) und einem Auskoppelbereich (8b) der Multikernfaser (8) eingerichtet ist, wobei
die Multikernfaser (8) mehrere gesonderte Faserkerne (15) umfasst, wobei in jeden Faserkern (15) wenigstens ein Laserstrahl (4) einkoppelbar oder eingekoppelt ist, wobei
die Belichtungseinrichtung (6) eine mit der Multikernfaser (8) optisch gekoppelte Fokussiereinrichtung (9) sowie eine mit der Fokussiereinrichtung (9) optisch gekoppelte Scannereinrichtung umfasst, ferner umfassend
eine Steuereinrichtung (17), welche zur Steuerung der Laserstrahlen (4) und/oder der Laserstrahleigenschaften der in die Faserkerne (15) der Multikernfaser (8) einkoppelbaren oder eingekoppelten Laserstrahlen (4) eingerichtet ist, wobei die Steuereinrichtung (17) eingerichtet ist, durch eine definierte örtliche und/oder zeitliche Steuerung der Laserstrahleigenschaften der in die Faserkerne der Multikernfaser (8) einkoppelbaren oder eingekoppelten Laserstrahlen (4) ein bestimmtes Belichtungsmuster auszubilden, wobei
die Steuereinrichtung (17) zur Realisierung einer Wobble-Strategie eingerichtet ist, in der die aus den Faserkernen (15) ausgekoppelten Laserstrahlen (4) durch wechselweise Inbetriebnahme von mit den Faserkernen (15) gekoppelten Laserstrahlerzeugungseinrichtungen (7) um einen bestimmten zu belichtenden Bereich einer Baumaterialschicht bewegt werden, wobei
in die Multikernfaser (8) mehrere hinsichtlich wenigstens eines Laserstrahlparameters, wie z. B. der Intensität, unterschiedliche Laserstrahlen einkoppelbar oder eingekoppelt sind und aus der Multikernfaser (8) mehrere hinsichtlich wenigstens eines Laserstrahlparameters unterschiedliche Laserstrahlen auskoppelbar oder ausgekoppelt sind, wodurch sich mit ein und derselben Multikernfaser (8) ein variierbares oder variables Profil der insgesamt aus der Belichtungseinrichtung (6) auskoppelbaren bzw. ausgekoppelten Laserstrahlung realisieren lässt, wobei
die Multikernfaser (8) eine runde oder rundliche Querschnittsfläche aufweist, wobei wenigstens ein erster Faserkern (15) in der oder im Bereich einer Symmetrie- oder Zentralachse der Multikernfaser (8) angeordnet ist und weitere Faserkerne (15) symmetrisch verteilt um den wenigstens einen ersten Faserkern (15) angeordnet sind.

2. Vorrichtung nach Anspruch 1, **dadurch gekennzeichnet, dass** die Faserkerne (15) gleiche oder unterschiedliche Faserkerngeometrien, insbesondere Faserkernquerschnittsgeometrien, aufweisen.

3. Vorrichtung nach einem der vorhergehenden Ansprüche, **dadurch gekennzeichnet, dass** die Faserkerne (15) relativ zueinander äquidistant verteilt angeordnet sind.

4. Vorrichtung nach einem der vorangehenden Ansprüche, **dadurch gekennzeichnet, dass** die Steuereinrichtung eingerichtet ist, durch eine definierte Steuerung der Laserstrahleigenschaften der in die Faserkerne (15) der Multikernfaser (8) einkoppelbaren oder eingekoppelten Laserstrahlen (4), über einen aus wenigstens einem ersten Faserkern (15) auskoppelbaren oder ausgekoppelten ersten Laserstrahl (4) eine selektive Belichtung und eine damit einhergehende selektive Verfestigung einer Baumaterialschicht zu realisieren und über einen aus wenigstens einem weiteren Faserkern (15) auskoppelbaren oder ausgekoppelten weiteren Laserstrahl (4) eine zumindest abschnittsweise thermische Vorbehandlung einer selektiv zu verfestigenden Baumaterialschicht und/oder eine zumindest abschnittsweise thermische Nachbehandlung einer selektiv verfestigten Baumaterialschicht zu realisieren.

## Claims

1. Apparatus (1) for the additive manufacturing of three-dimensional objects (2) by successive, selective layer-by-layer exposure and thereby successive, selective layer-by-layer compacting of building material layers, consisting of building material (3) compactable by means of a laser beam (4), comprising at least an exposure unit (6), which comprises: - several laser beam generating units (7) arranged for generating a laser beam (4),
- at least one multi-core fiber (8) that can be optically coupled or that is coupled with the laser beam generating units (7), which is provided for conducting laser beams (4) coupled into it between a coupling area (8a) of the multi-core fibers (8) and a decoupling area (8b) of the multi-core fibers (8), wherein
the multi-core fibers (8) comprise several separate fiber cores (15), wherein at least one laser beam (4) can be coupled or is coupled into each fiber core (15), wherein
the exposure unit (6) comprises a focusing unit (9) optically coupled with the multi-core fibers (8) and a scanner unit optically coupled with the focusing unit (9) that is optically coupled with the multi-core fibers (8), further comprising
a control unit (17) provided for the control of the laser beams (4) and/or the laser beam characteristics of the laser beams of the laser beams (4) that can be or that are coupled into the fiber cores (15) of the in multi-core fibers (8), wherein
the control unit (17) is arranged to form, by means of a defined local and/or temporal control of the laser beam characteristics of the laser beams (4) that can be or that are coupled into the fiber cores of the multi-core fibers (8), a certain exposure pattern,
wherein the control unit (17) is arranged to implement a wobble strategy in which the laser beams (4) that are decoupled from the fiber cores (15) are moved around a defined area of a construction material layer that is to be exposed by alternating activation of the laser beam generating units (7) that are coupled with the fiber cores (15), wherein
several laser beams that are different regarding at least one laser beam parameter, e.g. intensity, can be or are coupled into the multi-core fibers (8) and several laser beams that are different regarding at least one laser beam parameter can be or are decoupled from the multi-core fibers (8), whereby
an adjustable or variable profile of the laser beam that can be or is decoupled from the exposure unit (6) can be implemented by means of one and the same multi-core fibers (8),
wherein
the multi-core fibers (8) have a round or rounded cross section surface, wherein at least one first fiber core (15) is symmetrically distributed in or in the area of a symmetrical or center axis of the multi-core fibers (8) and further fiber cores (15) around the at least one first fiber core (15).

2. Apparatus according to claim 1, **characterized in that**
the fiber cores (15) have identical or different fiber core geometries, in particular fiber core cross-section geometries.

3. Apparatus according to one of the foregoing claims, **characterized in that** the fiber cores (15) are arranged at equal distances relative to each other.

4. Apparatus according to one of the foregoing claims, **characterized in that** the control unit is arranged so that, by means of a defined control of the laser beam (4) characteristics of the laser beams that are or can be coupled into the fiber cores (15) of the multi-core fibers (8), through a first laser beam (4) that is or can be decoupled from at least a first fiber core (15), a selective exposure and related selective solidification of the building material layer can be implemented and, by means of another laser beam (4) that is or can be decoupled from at least one further fiber core (15), an at least sectional thermal aftertreatment of a building material layer to be selectively compacted and/or an at least sectional thermal aftertreatment of a building material layer to be selectively compacted can be implemented.

## Revendications

1. Appareil (1) de fabrication additive d'objets tridimensionnels (2) par irradiation sélective successif couche par couche et ainsi solidification concomitante sélective successive couche par couche de couches de matériaux de construction à partir d'un matériau de construction (3) solidifiable au moyen d'un rayon laser (4), comprenant au moins un dispositif d'irradiation (6), qui comprend : - plusieurs dispositifs de production de rayon laser (7) conçus pour produire un rayon laser (4),
- au moins une fibre multicœur (8) optiquement couplée ou couplable avec les dispositifs de production de rayon laser (7), conçue pour guider ces rayons laser (4) couplés entre une zone de couplage (8a) de la fibre multicœur (8) et une zone de découplage (8b) de la fibre multicœur (8),
où la fibre multicœur (8) comprend plusieurs cœurs de fibre (15) séparés, au moins un rayon laser (4) étant couplé ou couplable dans chaque cœur de fibre (15),
où le dispositif d'irradiation (6) comprend un dispositif de focalisation (9) optiquement couplé à la fibre multicœur (8) ainsi qu'un dispositif de balayage optiquement couplé au dispositif de focalisation (9), comprenant en outre
un dispositif de commande (17) conçu pour commander les rayons laser (4) et/ou les propriétés de rayons laser des rayons laser (4) couplés ou couplables dans les cœurs de fibre (15) de la fibre multicœur (8),
le dispositif de commande (17) étant conçu pour former un motif d'irradiation déterminé par une commande spatiale et/ou temporelle définie des propriétés de rayon laser des rayons laser (4) couplés ou couplables dans les cœurs de fibre de la fibre multicœur (8), où le dispositif de commande (17) est conçu pour réaliser une stratégie d'oscillation, dans laquelle les rayons laser (4) découplés des cœurs de fibre (15) sont déplacés par la mise en marche alternative de dispositifs de production de rayons laser (7) couplés aux cœurs de fibre (15) autour d'une zone déterminée à irradier d'une couche de matériau de construction,
où en entrée de la fibre multicœur (8), plusieurs rayons lasers différents du point de vue d'au moins l'un des paramètres de rayon laser, ex. du point de vue de l'intensité, sont couplés ou couplables, et où en sortie de la fibre multicœur (8), plusieurs rayons lasers différents du point de vue d'au moins l'un des paramètres de rayon laser sont découplés ou découplables,
grâce à quoi, avec une seule et même fibre multicœur (8), on réalise un profil variable ou pouvant varier du rayon laser découplé ou découplable issu du dispositif d'irradiation (6),
où
la fibre multicœur (8) présente une surface de section ronde ou arrondie, au moins un premier cœur de fibre (15) étant disposé dans ou à proximité d'un axe central ou de symétrie de la fibre multicœur (8) et d'autres cœurs de fibre (15) étant disposés répartis symétriquement autour de l'au moins un premier cœur de fibre (15).

2. Appareil selon la revendication 1,
**caractérisé en ce que** les cœurs de fibre (15) présentent des géométries de cœur de fibre, en particulier des géométries de section de cœur de fibre, identiques ou différentes.

3. Appareil selon l'une quelconque des revendications précédentes, **caractérisé en ce que** les cœurs de fibre (15) sont disposés équidistants les uns par rapport aux autres.

4. Appareil selon l'une quelconque des revendications précédentes, **caractérisé en ce que** le dispositif de commande est conçu pour réaliser une irradiation sélective et ainsi une solidification concomitante d'une couche d'un matériau de construction par une commande définie des propriétés de rayon laser des rayons laser (4) couplés ou couplables dans les cœurs de fibre (15) de la fibre multicœur (8) via un premier rayon laser (4) découplé ou découplable en sortie d'au moins un premier cœur de fibre (15), et pour réaliser un prétraitement thermique au moins par sections via un autre rayon laser (4) découplé ou découplable en sortie d'un autre cœur de fibre (15) et/ou un posttraitement au moins par sections d'une couche de matériau de construction sélectivement solidifié.
